(19) Europäisches Patentamt
European Patent Office
Office européen des brevets

(11) EP 1 998 262 A1

(12) EUROPEAN PATENT APPLICATION

(43) Date of publication:
**03.12.2008 Bulletin 2008/49**

(51) Int Cl.:
***G06F 17/30*** (2006.01) ***H04L 29/08*** (2006.01)

(21) Application number: **07109377.7**

(22) Date of filing: **31.05.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(71) Applicant: **Research In Motion Limited**
**Waterloo, Ontario N2L 3W8 (CA)**

(72) Inventor: **Vitanov, Kamen B.**
**Mississauga, Ontario L5M 6E8 (CA)**

(74) Representative: **Rickard, David John**
**Ipulse**
**26 Mallinson Road**
**London**
**SW11 1BP (GB)**

(54) **System and method for efficient dynamic and connectivity aware web page rendering**

(57) A method and apparatus for dynamic and connectivity aware web page rendering on a device having at least one connection to an Internet protocol network, the method having the steps of: requesting a web page; receiving the web page requested along with links to at least one element within the web page; finding connectivity requirements for an element selected from the at least one element; checking whether attributes of any one of the at least one connection are better than the connectivity requirements for the element; and if yes, downloading the element using the any one of the at least one connection whose attributes are better than the connectivity requirements for the element.

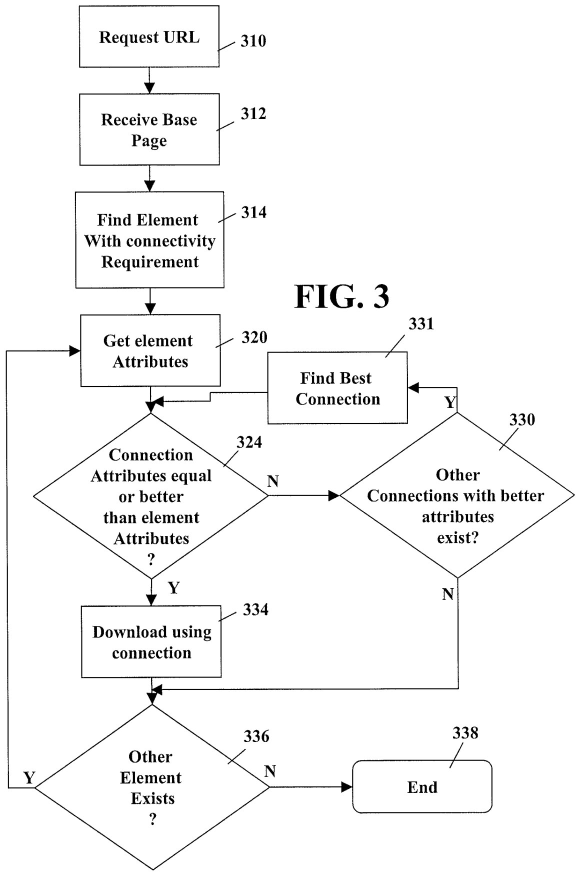


FIG. 3

EP 1 998 262 A1

## Description

The present disclosure relates generally to enhanced web browsing and in particular to the rendering of web pages on devices.

Devices such as mobile devices are becoming increasingly sophisticated. In addition to providing voice communication capabilities, devices are increasingly being used for data communications. This includes electronic mail messages but also includes browsing networks such as the Internet.

A mobile device will generally communicate wirelessly through a radio frequency communications channel. Various standards for radio frequency communications are known to those in the art.

Other devices are known as dual mode or multi-mode wireless devices and can communicate through both wireless networks and other networks such as wireless fidelity (WiFi) networks, or through short range wired or wireless communications such as IrDA, Bluetooth™, USB, among others.

Other devices such as laptop computers also can communicate in one or more ways with Internet Protocol networks, and the use of the term mobile device in the present disclosure is meant to cover laptop computers as well as other similar devices.

With the advent of dual mode and multi-mode wireless devices, a device can have more than one connection to the Internet at a given time. This is referred to herein as the connectivity profile.

Mobile devices that allow browsing on the Internet have web browsers and currently these browsers render pages regardless of the current connectivity profile. In some cases the user can manually select which connection should be used for the duration of the browser session but there is no mechanism for intelligent and dynamic routing of incurred traffic over available connections.

## GENERAL

The connection profile of a mobile device has various characteristics. Examples include bandwidth, latency, cost, reliability and security. A wireless browser benefits from mechanisms for intelligent and dynamic routing of the incurred traffic over the available connections by taking into account the above characteristics.

A two part solution is presented herein. A first approach, referred to herein as a design time approach, allows every element within the web page to have connectivity requirements specified for it. The term "element" can be anything within a web page that is linked from the primary page. Examples of such links include images, sounds, videos, animations, among others.

In the design time approach, a designer of a web page can specify the properties of the connection that would allow the loading of that element. For example, a large image may require a bandwidth of at least 128 Kbs. Streaming animation may require that the latency be less than 1 second. A designer may realize that large packets cost the user money when browsing over a mobile wireless network and thus cost per traffic can be specified, wherein the element will only be loaded if the cost per traffic is less than a certain value. Reliability can be used for ensuring that, for example, receipts are acknowledged in certain cases, data integrity is maintained, and packet ordering is maintained. Security can be used for sites that are particularly security conscious. Some connections to mobile devices include non-secure links which a website may wish to avoid and thus certain security requirements may be required. These include data confidentiality, data integrity, data origin authentication, replay prevention, client authentication, server authentication and data non-repudiation, among others.

A second mode of operation is a run time mode. In this case, the mobile device originally receives the base web page with all of the elements as links within it. Such links are known to those skilled in the art and will be referred to herein as uniform resource locator (URL) links, although other links are possible. The mobile device browser can then decide whether or not to request the URL links based on the type of URL link. A modified mobile device is presented herein which includes both a decision module and a connection manager. These modules allow a decision to be made whether or not the element should be loaded.

The present specification therefore may provide a method of dynamic and connectivity aware web page rendering on a device having at least one connection to an Internet protocol network, the method comprising the steps of:

> requesting a web page; receiving the web page requested along with links to at least one element within the web page; finding connectivity requirements for an element selected from the at least one element; checking whether attributes of
> any one of the at least one connection are better than the connectivity requirements for the element; and if yes, downloading the element using the any one of the at least one connection whose attributes are better than the connectivity requirements for the element.

The present specification may further provide a device for dynamic and connectivity aware web page rendering, the device having a communications subsystem adapted to communicate utilizing at least one connection to an Internet protocol network; memory; a user interface; a processor adapted to run user applications and interact with the memory, the communications subsystem and the user interface and adapted to run applications, the device characterized by having: a fetching module utilizing the communications subsystem to request a web page and receive the web page requested along with links to at least one element within the web page; a connection module adapted to track attributes of the at least one connection; a decision module communicating with the fetching module and the communication module, the decision module adapted to find connectivity requirements for an element selected from the at least one element and check whether attributes of any one of the at least one connection are better than the connectivity requirements for the element; and if yes, the decision module being adapted to instruction the fetching module to download the element using the any one of the at least one connection whose attributes are better than the connectivity requirements for the element.

## BRIEF DESCRIPTION OF THE DRAWINGS

The present application will be better understood with reference to the drawings in which:

**Figure 1** is a block diagram of an exemplary wireless data network in accordance with the present disclosure;
**Figure 2** is block diagram showing a method according to the present disclosure;
**Figure 3** is a block diagram showing an alternative method according to the present disclosure;
**Figure 4** is a block diagram of a device having modules for implementing the method of the present disclosure; and
**Figure 5** is a block diagram of an exemplary mobile device that can be used in accordance with the present method.

## DESCRIPTION OF PREFERRED EMBODIMENTS

Reference is now made to **Figure 1. Figure 1** is a block diagram of an exemplary wireless data network in accordance with the present disclosure and with which the various embodiments of the method of the instant disclosure may cooperate. **Figure 1** shows a block diagram of a wireless data device **110** and an exemplary CDMA 1x network **120,** an exemplary EVDO network **130,** a public switched telephone network (PSTN) **135,** a data network **140** and a WiFi network **150** with which the instant techniques of the application may cooperate. Other network types such as GSM/GPRS/edge technology, among others are within the scope of the present disclosure, and the use of a CDMA/EVDO network is only an example used to provide context.

The wireless device **110** is preferably a multi-mode communication device having data and voice communication capabilities. As will be appreciated by those skilled in the art, the exemplary multi-mode device of **Figure 1** is also meant as an example of a multi-mode device and other multi-mode devices will exist. Further, the techniques of the present disclosure will also work with single mode devices and thus **Figure 1** is merely meant as an example and to provide context for the present application.

CDMA network **120** is comprised of a base transceiver station (BTS) **122** and a base station controller (BSC) **124.** Base station controller **124** communicates with a mobile switching center **126** which, as will be appreciated, is a circuit switched only component communicating with PSTN **135.** Base station controller **124** further communicates with a packet data serving node (PDSN) **128** which is a packet switched only component. PDSN **128** further communicates with IP network **140.** IP network **140** is, in a preferred embodiment, the Internet.

EVDO network **130** contains and EVDO sector **132** which communicates with access node **134.** Since the EVDO network **130** is a data only network, access node **134** communicates only with PDSN **128** and not with any circuit switched components.

WiFi network **150** includes an access point **152** communicating with mobile device **110.** Access point **152** communicates with a router **154,** which in turn communicates with the IP network **140.**

The communication links between the mobile device and the CDMA 1x network is designated as connection **121.** The connection between mobile device and the EVDO network is designated as connection **131.** The connection between the mobile device and the WiFi network is designated as connection **151.**

As will be appreciated by those skilled in the art, connections **121**, **131** and **151** each have different characteristics. These characteristics can be defined in terms of the bandwidth, the latency, the cost, the reliability, and the security of the connection, among others. A multi-mode device with a wireless browser could, optimally, choose which connection to use to render various components on a web page.

Reference is now made to **Figure 2. Figure 2** discloses a method from a mobile device for providing the efficient dynamic and connectivity aware web browsing on a mobile device.

In step **210,** a mobile browser requests a web page from the Internet. One such method of selecting a web page is through a uniform resource locator (URL).

In step **212,** the mobile device receives the base HTML definition of the page that was requested by the URL.

The base HTML definition, as will be appreciated by those skilled in the art, is the page that the browser requested and is received by the browser prior to the obtaining and rendering any links within the base HTML definition. For example, a web page may include text within the body of the page along with a link to an image. On a standard browser, the browser will first download the base HTML definition, which includes the text and the link. Subsequently it will go and obtain the image that is being pointed to by the link within the base HTML definition.

According to one embodiment of the present method, from step **212** the process proceeds to step **214** in which it scans the received main page to find whether there are any elements with connectivity requirements within the element.

As will be appreciated by those skilled in the art, step **214** can find whether the elements have connectivity requirements based on two different cycles of the life of the web page. These are the design time and the run time cycles. A design time cycle can include connectivity element attributes programmed within each element on a web page. When designing a web page, the web page developer can specify the connectivity requirements in the element. Thus, for example, using a tag labeled "CR" to designate a connectivity requirement, a designer could specify the following tag:

```
<img src=“./sample_img.jpg” CR_bandwidth=128 CR_latency=3
CR_cost=0.10 CR_security=2 CR_reliability=1>
```

The above declaration of a connectivity requirement is however only meant as an example and other definitions of connectivity requirements may vary considerably from this example.

The above example of an image includes various connectivity requirements. As will be appreciated by those skilled in the art, not all of these connectivity requirements need to necessarily be within each element, but the above is provided for a more complete example.

The above code indicates that the bandwidth for downloading the image must be at least 128 Kbs/second. Thus, if the connection on the mobile device provides a bandwidth of less than 128 Kbs/second, the mobile device can choose not to receive that element of the web page.

The second element is CR_latency=3. This means that the latency must be less than or equal to 3 seconds. If the latency on the connection is greater than 3 seconds, the developer may choose to have the mobile device ignore that element or defer loading the element until a connection is established with a latency of less than three seconds. In other words, by placing a restriction in the link of "CR_latency=3", the developer assures that the link will be ignored if the mobile device has no connection with a latency of greater than 3 seconds. While the developer may choose not to do this with images, latency could be more important for animation or streaming sound or video.

The element CR_cost=0.10 could indicate that the cost needs to be less than 10¢ per N bytes where N is an integer value. Thus, the developer could be indicating that the mobile device should only download the image if a favourable connection exists. For example, the network in multi-mode wireless device **110** of **Figure 1** has connections **121, 131** and **151.** Mobile communications RF connections such as **121** and **131** may be a high cost connection and therefore the cost for downloading the image may be greater than 10¢ per N bytes. Conversely, a WiFi connection such as connection **151** may be a lower cost connection, and if the mobile device is connected to the WiFi network **150,** it is worthwhile to download the image. Costs as used herein are not necessary specified in a dollar amount but instead can be a relative value such as "low", "medium" or "high".

The CR_security=2 parameter designates that the security of the connection needs to be at a certain level. For example, financial transactions may redirect the mobile device to a separate page. However, the mobile device may object to the redirection if the security of the link is not a certain level. The level of security could be based on a uniform definition of security levels, or further abstractions, such as encryption level, could be made within the connectivity requirements.

The CR_reliability=1 indicates the reliability. This is based on the type of network and in certain cases, receipt acknowledgements, data integrity, check sums, packet ordering, etc. are required. In such cases, the reliability needs to be at a certain level in order to load the element.

A second solution for step **214** is a run-time solution. In this case, the mobile browser would need additional components, as illustrated and described in **Figure 4** below. These elements include a decision module and a connection manager. Reference is now made to **Figure 4. Figure 4** shows a browser **415** with a decision module **420** and a connection manager **430.**

A fetching module **410** is responsible for interacting with a web page **450** and further a rendering module **415** is responsible for rendering the web page.

Decision module **420** is responsible for determining how a web page element will be processed. Based on available connections, the decision module can choose an appropriate connection for fetching the content for the web page element or ignore the element completely. The decision module uses the connection manager **430** to discover all connections currently available and corresponding connectivity attributes of each connection.

Connection manager **430** keeps track of all connections available at any given time. For every connection, connection manager **430** maintains a set of connectivity attributes characterizing the connection. These can include, but are not limited to, bandwidth, latency, cost, reliability and security. As will be appreciated by those skilled in the art, a subset of these attributes could also be maintained by the connection manager **430** and not all these attributes need to necessarily be maintained.

The attributes are stored in the same units for various connections on the connection manager **430** and also in the same units as those designated by the connectivity requirement (CR) tag used by web page developers.

When fetching and rendering a web page, the browser **415** extracts any content requirements found within the web page. These content requirements are passed on to the decision module **420,** which instructs what actions should be taken for the elements. The decision module **420** makes the decision by matching an element's connectivity requirements to the connectivity attributes of any available connections.

As will be appreciated by those in the art, decision module **420** and connection manager **430** could also be located outside of browser **415.** In this case, fetching module **410** and rendering module **415** are modified to communicate with the external decision module **420** and connection manager **430.**

Referring again to **Figure 2** from step **214,** the process proceeds to step **220.** In step **220,** the process gets the element attributes. As described above, these element attributes can be either explicitly within the tag that was provided by a designer or could be inherent based on the type of element. For example, in step **220** a web page that was not designed with connectivity requirements still has element types, such as images, sound, video, among others. Each of these element types is associated, by the mobile device, with certain connectivity requirements. Thus the mobile device might require a minimum bandwidth before allowing images to be downloaded or a maximum latency before streaming video is loaded. In a preferred embodiment each element type is associated with a predetermined connectivity profile that is stored on the mobile device. Other possibilities could include the dynamic changing of the connectivity profile for an element by a user. This may be used if the user wishes to receive a certain element type regardless of the connection

The process next proceeds to step **224** in which it checks whether the connection attributes matches or is better than required by the element attributes. As will be appreciated, certain comparisons require the connection attributes to be higher than the element attribute and other comparisons require the connection attributes to be lower than the element attribute. The bandwidth of a connection must be higher than or equal to the minimum bandwidth specified by the designer for an element or specified in the profile for the element. The cost of downloading on a connection must be lower than or equal to the maximum cost provided by for the element. The term "better" above is being used to refer to the connection attribute being higher than the element attribute (e.g. for bandwidth) or the connection attribute being lower than the element attribute (e.g. for latency), depending on the attribute.

For example, if, from **Figure 1,** the CDMA 1X connection **121** is presently being used for browsing, the bandwidth provided by the connection might be lower than that required by the element attributes. In this case, as seen in **Figure 2**, the process proceeds to step **230** in which the process checks whether any other connection is open or can be opened. If another connection is open or can be opened, for example connection **151** from **Figure 1,** the process proceeds back to step **224** in which it checks whether or not the connection attributes of the new connection meets or exceeds the element attributes.

If yes, the process proceeds from step **224** to step **234** in which the element is downloaded using the connection found. The process next proceeds to step **236** in which it checks whether other elements are present within the received main page.

Similarly, if no other connection is available in step **230,** the process ignores the element since it is not able to download it according to the element attributes and proceeds to step **236** in which it checks to see whether another element exists.

From step **236,** if no other element exists, the process is ended in step **238.** If a further element exists, the process proceeds back to step **220** in which it checks the element attributes of the next element and again sees whether or not the connection attributes are greater than or equal to the element attributes in order to download the element.

Thus each element is checked based on attributes designed by a page designer or stored in a profile for the element type. The element can be downloaded using a connection between the mobile device and the Internet if the connection attributes meet or are better than the element attributes. Otherwise the mobile device (or the browser within the mobile device) looks for other connections that may be used. In some cases the element will not be loaded at all based on one or more of the connection attributes on every connection being worse than the element attributes required. In this case the link would either be ignored or deferred until a suitable connection is available.

Reference is now made to **Figure 3. Figure 3** discloses an alternative method to that of **Figure 2** for providing efficient dynamic and connectivity where web browsing on a mobile device.

In step **310,** the mobile browser requests a web page from the Internet. This is similar to step **210** of **Figure 2.**

In step **312,** the mobile device receives the base HTML definition of the page that was requested by the URL, similar to step **212** of **Figure 2.**

The process then proceeds to step **314** in which it scans the received main page to find whether there are any elements with connectivity requirements within the element.

The process proceeds to step **320** in which the process gets the element attributes. As described above, these element attributes can be either explicitly within the tag that was provided by a designer or could be inherent based on the type of element.

The process then proceeds to step **324** in which it checks to see whether the current connection has attributes that are better or equal than those required by the element attributes.

If not, the process proceeds to step **330** in which is checks whether other connections exist and if yes the process proceeds to step **331** in which the best connection that exists is found. As will be appreciated by those skilled in the art, the best connection that is available can be found in various ways. These can include finding all available connections and determining which best suits the element attributes that need to be downloaded. Various options including storing information on the mobile device until the connection is no longer visible to the mobile device also exist in order to expedite this process. Other options would be apparent to those skilled in the art.

From step **331,** the process proceeds back to step **324** in which it checks to see whether the connection chosen has attributes equal to or better than the element attributes. If no, then the process proceeds back to step **330.** However, in the case of **Figure 3,** since the best connection was previously chosen in step **330,** the check in **step** 330 will find that other connections with better attributes do not exist and thus the process proceeds to step **336** in which it checks whether other element types exist in the web page being requested.

Alternatively, from step **324** if the connection that is found has better or equal attributes to those of the element attributes then the element is downloaded using the connection in step **334.**

From step **336,** the process proceeds back to step **320** to get the remaining element attributes and the process continues in this way. From step **336** if there is no other element that exists, the process proceeds to step **338** and ends.

Thus, as opposed to **Figure 2** in which the first connection found that has equal or better attributes is used, the alternative method of **Figure 3** chooses the best connection within which to download the element attributes.

In a further alternative, steps **224** or **324** from **Figures 2** or **3** could perform a more intelligent check. Specifically, certain element attributes may be more important than others to a specific element type. Thus, for example, if an element has certain bandwidth, cost, and latency requirements, the important elements may be the bandwidth and the cost whereas the latency is a preferred element. In this case, the check in steps **324** and **224** could see whether or not the bandwidth or the cost is better than those required by the element attributes. Even if the latency requirement is not met, then the check in steps **224** and **324** could determine that a download can be made and thus proceed to step **234** or **334.**

The above may also work with a predetermined ratio of the elements being present. Thus, for example, if two out of three element attributes are met then the decision in steps **224** and **324** may be to proceed with the download.

Further, a user may have the ability to specify certain element attributes as critical and others as non-critical. Thus, for example, a user could specify that cost is a critical element and therefore elements should not be downloaded if the cost exceeds the element cost. In this case, even if two out of three element attributes are present, if the element attribute that is not present is cost, a download will not occur.

Other decision criteria are possible for steps **224** and **324** of **Figures 2** and **3.**

As will be appreciated, the above can be implemented on any mobile device or other device with one or more Internet Protocol network access means. One exemplary mobile device is described below with reference to **Figure 5.** This is not meant to be limiting, but is provided for illustrative purposes.

**Figure 5** is a block diagram illustrating a mobile device apt to be used with preferred embodiments of the apparatus and method of the present application. Mobile device **500** is preferably a two-way wireless communication device having at least voice and data communication capabilities. Mobile device **500** preferably has the capability to communicate with other computer systems on the Internet. Depending on the exact functionality provided, the wireless device may be referred to as a data messaging device, a two-way pager, a wireless e-mail device, a cellular telephone with data messaging capabilities, a wireless Internet appliance, or a data communication device, as examples.

Where mobile device **500** is enabled for two-way communication, it will incorporate a communication subsystem **511,** including both a receiver **512** and a transmitter **514,** as well as associated components such as one or more, preferably embedded or internal, antenna elements **516** and **518,** local oscillators (LOs) **513,** and a processing module such as a digital signal processor (DSP) **520.** As will be apparent to those skilled in the field of communications, the particular design of the communication subsystem **511** will be dependent upon the communication network in which the device is intended to operate.

Network access requirements will also vary depending upon the type of network **519.** In some CDMA networks network access is associated with a subscriber or user of mobile device **500.** A CDMA mobile device may require a removable user identity module (RUIM) or a subscriber identity module (SIM) card in order to operate on a CDMA network.. The SIM/RUIM interface **544** is normally similar to a card-slot into which a SIM/RUIM card can be inserted and ejected like a diskette or PCMCIA card. The SIM/RUIM card can have approximately 64K of memory and hold many key configuration **551,** and other information **553** such as identification, and subscriber related information.

When required network registration or activation procedures have been completed, mobile device **500** may send and receive communication signals over the network **519.** As illustrated in **Figure 5,** network **519** can consist of multiple base stations communicating with the mobile device. For example, in a hybrid CDMA 1x EVDO system, a CDMA base station and an EVDO base station communicate with the mobile device and the mobile device is connected to both simultaneously. The EVDO and CDMA 1x base stations use different paging slots to communicate with the mobile device.

Signals received by antenna **516** through communication network **519** are input to receiver **512,** which may perform such common receiver functions as signal amplification, frequency down conversion, filtering, channel selection and the like, and in the example system shown in **Figure 5,** analog to digital (A/D) conversion. A/D conversion of a received signal allows more complex communication functions such as demodulation and decoding to be performed in the DSP **520.** In a similar manner, signals to be transmitted are processed, including modulation and encoding for example, by DSP **520** and input to transmitter **514** for digital to analog conversion, frequency up conversion, filtering, amplification and transmission over the communication network **519** via antenna **518.** DSP **520** not only processes communication signals, but also provides for receiver and transmitter control. For example, the gains applied to communication signals in receiver **512** and transmitter **514** may be adaptively controlled through automatic gain control algorithms implemented in DSP **520.**

Mobile device **500** preferably includes a microprocessor **538** which controls the overall operation of the device. Communication functions, including at least data and voice communications, are performed through communication subsystem **511.** Microprocessor **538** also interacts with further device subsystems such as the display **522,** flash memory **524,** random access memory (RAM) **526,** auxiliary input/output (I/O) subsystems **528,** serial port **530,** one or more keyboards or keypads **532,** speaker **534,** microphone **536,** other communication subsystem **540** such as a short-range communications subsystem and any other device subsystems generally designated as **542.** Serial port **530** could include a USB port or other port known to those in the art.

Some of the subsystems shown in **Figure 5** perform communication-related functions, whereas other subsystems may provide "resident" or on-device functions. Notably, some subsystems, such as keyboard **532** and display **522,** for example, may be used for both communication-related functions, such as entering a text message for transmission over a communication network, and device-resident functions such as a calculator or task list.

Operating system software used by the microprocessor **538** is preferably stored in a persistent store such as flash memory **524,** which may instead be a read-only memory (ROM) or similar storage element (not shown). Those skilled in the art will appreciate that the operating system, specific device applications, or parts thereof, may be temporarily loaded into a volatile memory such as RAM **526.** Received communication signals may also be stored in RAM **526.**

As shown, flash memory **524** can be segregated into different areas for both computer programs **558** and program data storage **550, 552, 554** and **556.** These different storage types indicate that each program can allocate a portion of flash memory **524** for their own data storage requirements. Microprocessor **538,** in addition to its operating system functions, preferably enables execution of software applications on the mobile device. A predetermined set of applications that control basic operations, including at least data and voice communication applications for example, will normally be installed on mobile device **500** during manufacturing. Other applications could be installed subsequently or dynamically.

A preferred software application may be a personal information manager (PIM) application having the ability to organize and manage data items relating to the user of the mobile device such as, but not limited to, e-mail, calendar events, voice mails, appointments, and task items. Naturally, one or more memory stores would be available on the mobile device to facilitate storage of PIM data items. Such PIM application would preferably have the ability to send and receive data items, via the wireless network **519.** In a preferred embodiment, the PIM data items are seamlessly integrated, synchronized and updated, via the wireless network **519,** with the mobile device user's corresponding data items stored or associated with a host computer system. Further applications may also be loaded onto the mobile device **500** through the network **519,** an auxiliary I/O subsystem **528,** serial port **530,** short-range communications subsystem **540** or any other suitable subsystem **542,** and installed by a user in the RAM **526** or preferably a non-volatile store (not shown) for execution by the microprocessor **538.** Such flexibility in application installation increases the functionality of the device and may provide enhanced on-device functions, communication-related functions, or both. For example, secure communication applications may enable electronic commerce functions and other such financial transactions to be performed using the mobile device **500.**

In a data communication mode, a received signal such as a text message or web page download will be processed by the communication subsystem **511** and input to the microprocessor **538,** which preferably further processes the received signal for element attributes for output to the display **522,** or alternatively to an auxiliary I/O device **528.** A push client **560** could also process the input.

A user of mobile device **500** may also compose data items such as email messages for example, using the keyboard **532,** which is preferably a complete alphanumeric keyboard or telephone-type keypad, in conjunction with the display **522** and possibly an auxiliary I/O device **528.** Such composed items may then be transmitted over a communication network through the communication subsystem **511.**

For voice communications, overall operation of mobile device **500** is similar, except that received signals would preferably be output to a speaker **534** and signals for transmission would be generated by a microphone **536.** Alternative voice or audio I/O subsystems, such as a voice message recording subsystem, may also be implemented on mobile device **500.** Although voice or audio signal output is preferably accomplished primarily through the speaker **534,** display **522** may also be used to provide an indication of the identity of a calling party, the duration of a voice call, or other voice call related information for example.

Serial port **530** in **Figure 5** would normally be implemented in a personal digital assistant (PDA)-type mobile device for which synchronization with a user's desktop computer (not shown) may be desirable, but is an optional device component. Such a port **530** would enable a user to set preferences through an external device or software application and would extend the capabilities of mobile device **500** by providing for information or software downloads to mobile device **500** other than through a wireless communication network. The alternate download path may for example be used to load an encryption key onto the device through a direct and thus reliable and trusted connection to thereby enable secure device communication. As will be appreciated by those skilled in the art, serial port **530** can further be used to connect the mobile device to a computer to act as a modem.

Other communications subsystems **540,** such as a short-range communications subsystem, is a further optional component which may provide for communication between mobile device **500** and different systems or devices, which need not necessarily be similar devices. For example, the subsystem **540** may include an infrared device and associated circuits and components or a Bluetooth™ communication module to provide for communication with similarly enabled systems and devices. Subsystem **540** may also be used for WiFi communications.

The embodiments described herein are examples of structures, systems or methods having elements corresponding to elements of the techniques of this application. This written description may enable those skilled in the art to make and use embodiments having alternative elements that likewise correspond to the elements of the techniques of this application. The intended scope of the techniques of this application thus includes other structures, systems or methods that do not differ from the techniques of this application as described herein, and further includes other structures, systems or methods with insubstantial differences from the techniques of this application as described herein.

## Claims

1. A method for dynamic and connectivity aware web page rendering on a device having at least one connection to an Internet protocol network, the method comprising the steps of:

   requesting a web page;
   receiving the web page requested along with links to at least one element within the web page;
   finding connectivity requirements for an element selected from the at least one element;
   checking whether attributes of any one of the at least one connection are better than the connectivity requirements for the element; and

      if yes, downloading the element using the any one of the at least one connection whose attributes are better than the connectivity requirements for the element.

2. The method of claim 1, wherein the connectivity requirements of the element and the attributes of any one of the at least one connection are one or more the following attributes: minimum bandwidth, maximum latency, maximum cost per traffic, minimum reliability and minimum security.

3. The method of claim 1 or claim 2, wherein the finding step comprises searching the web page for connectivity requirement tags embedded therein or assigning the element connectivity requirements based on an element type.

4. The method of claim 3, wherein the assigning step utilizes data stored on the device by a service provider for the device or data defined by a user of the device.

5. The method of any one of claims 1 to 4, wherein the downloading step utilizes the any one of the at least one connection whose attributes best meet the connectivity requirements of the element.

6. The method of any one of claims 1 to 5, wherein, if the checking step finds that the attributes of any one of the at least one connection are not better than the connectivity requirements for the element, the downloading of the element is deferred until a new connection whose attributes are better than the connectivity requirements of the element is established.

**7.** The method of any one of claims 1 to 6, wherein the at least one connection is not yet opened between the device and the Internet Protocol network.

**8.** The method of any one of claims 1 to 7, wherein the checking step further finds the at least one connection with the best attributes for the connectivity requirements of the element.

**9.** The method of any one of claims 1 to 8, wherein the checking step is positive if a predetermined ratio of connectivity requirements is present in the connection attributes.

**10.** A device for dynamic and connectivity aware web page rendering, the device having a communications subsystem adapted to communicate utilizing at least one connection to an Internet protocol network; memory; a user interface; a processor adapted to run user applications and interact with the memory, the communications subsystem and the user interface and adapted to run applications, the having:

a fetching module utilizing the communications subsystem to request a web page and receive the web page requested along with links to at least one element within the web page;
a connection module adapted to track attributes of the at least one connection;
a decision module communicating with the fetching module and the communication module, the decision module adapted to find connectivity requirements for an element selected from the at least one element and check whether attributes of any one of the at least one connection are better than the connectivity requirements for the element; and
if yes, the decision module being adapted to instruct the fetching module to download the element using the any one of the at least one connection whose attributes are better than the connectivity requirements for the element.

**11.** The device of claim 10, wherein the connectivity requirements of the element and the attributes of any one of the at least one connection comprise one or more of the following attributes: minimum bandwidth, maximum latency, maximum cost per traffic, minimum reliability and minimum security.

**12.** The device of claim 10 or claim 11, wherein the decision module is adapted to find connectivity requirements by searching the web page for connectivity requirement tags embedded therein or by assigning the element connectivity requirements based on an element type.

**13.** The device of claim 12, wherein the decision module is adapted to assign by utilizing data stored in the memory on the device by a service provider for the device or by utilizing data defined by a user of the device.

**14.** The device of any one of claims 10 to 13, wherein the decision module is adapted to instruct the fetching module to utilize the any one of the at least one connection whose attributes best meet the connectivity requirements of the element.

**15.** The device of any one of claims 10 to 14, further comprising a rendering module adapted to render web pages and any element downloaded by the fetching module on the user interface of the device.

**16.** The device of any one of claims 10 to 15, wherein the at least one connection comprises a not yet opened connection between the device and the Internet Protocol network.

**17.** The device of any one of claims 10 to 16, wherein the decision module is adapted to instruct the fetching module to download the element using the at least one connection with the best attributes for the connectivity requirements of the element.

**18.** The device of any one of claims 10 to 17, wherein the decision module is adapted to instruct the fetching module to download the element if a predetermined ratio of connectivity requirements is present in the connection attributes.

**19.** A computer readable medium storing computer readable instructions executable by a processor of a computing device to cause said device to implement the steps of the method of any one of claims 1 to 9.

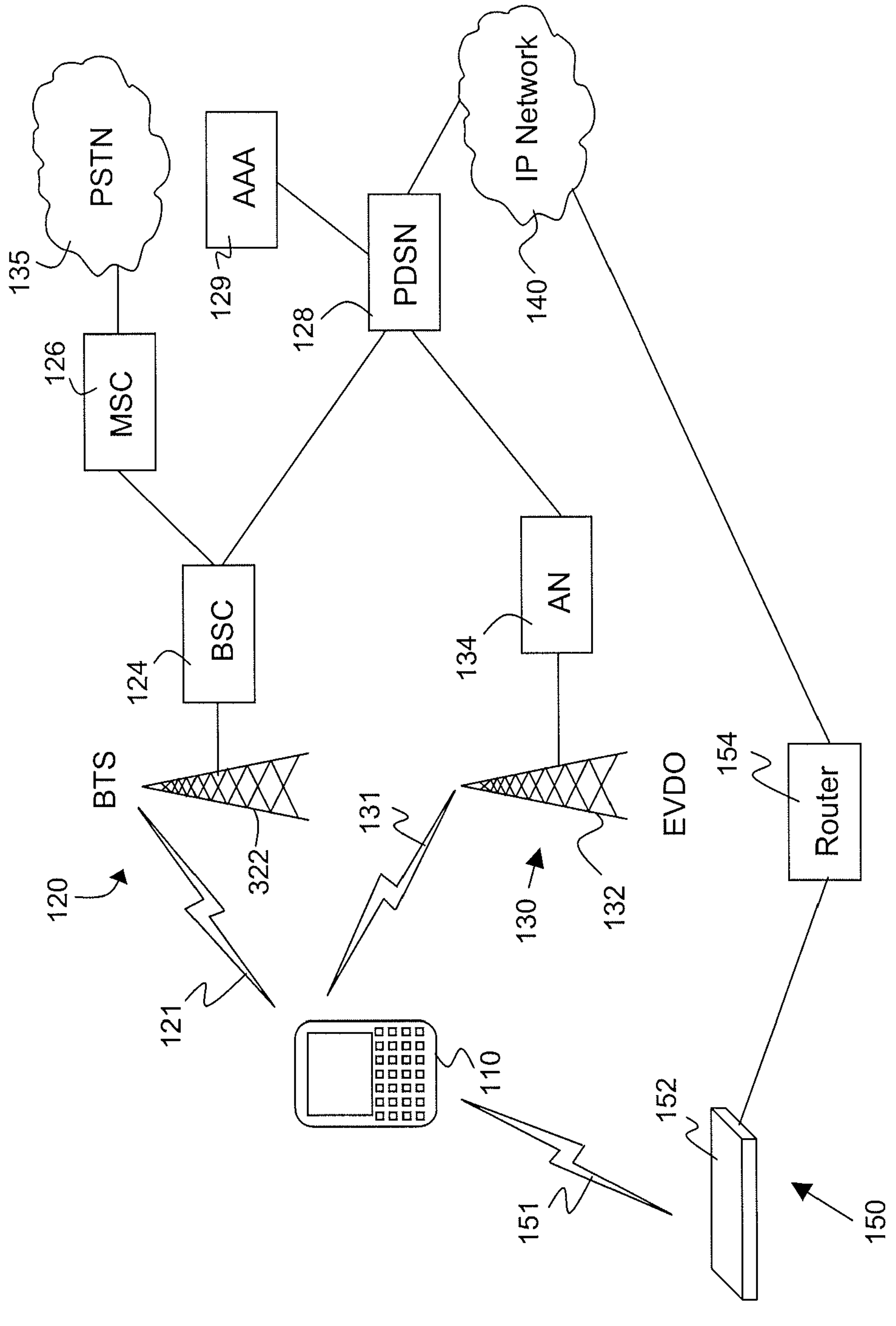
135
PSTN
126
MSC
129
AAA
128
PDSN
140
IP Network
124
BSC
134
AN
BTS
322
120
121
131
EVDO
130
132
110
154
Router
152
151
150

FIG. 1

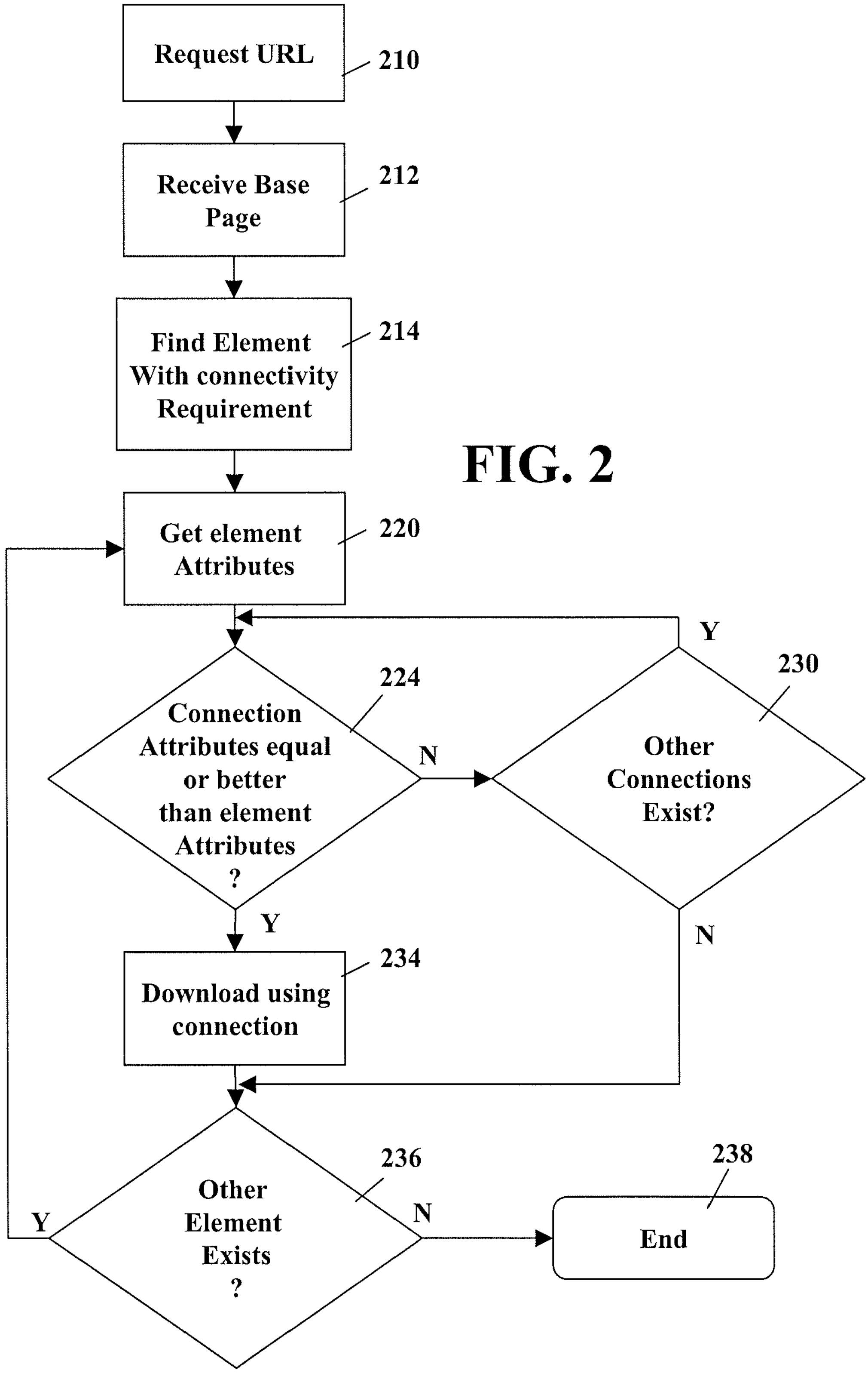
Request URL
210
Receive Base Page
212
Find Element With connectivity Requirement
214
Get element Attributes
220
Connection Attributes equal or better than element Attributes ?
224
N
Y
Other Connections Exist?
230
Y
N
Download using connection
234
Other Element Exists ?
236
Y
N
End
238

FIG. 2

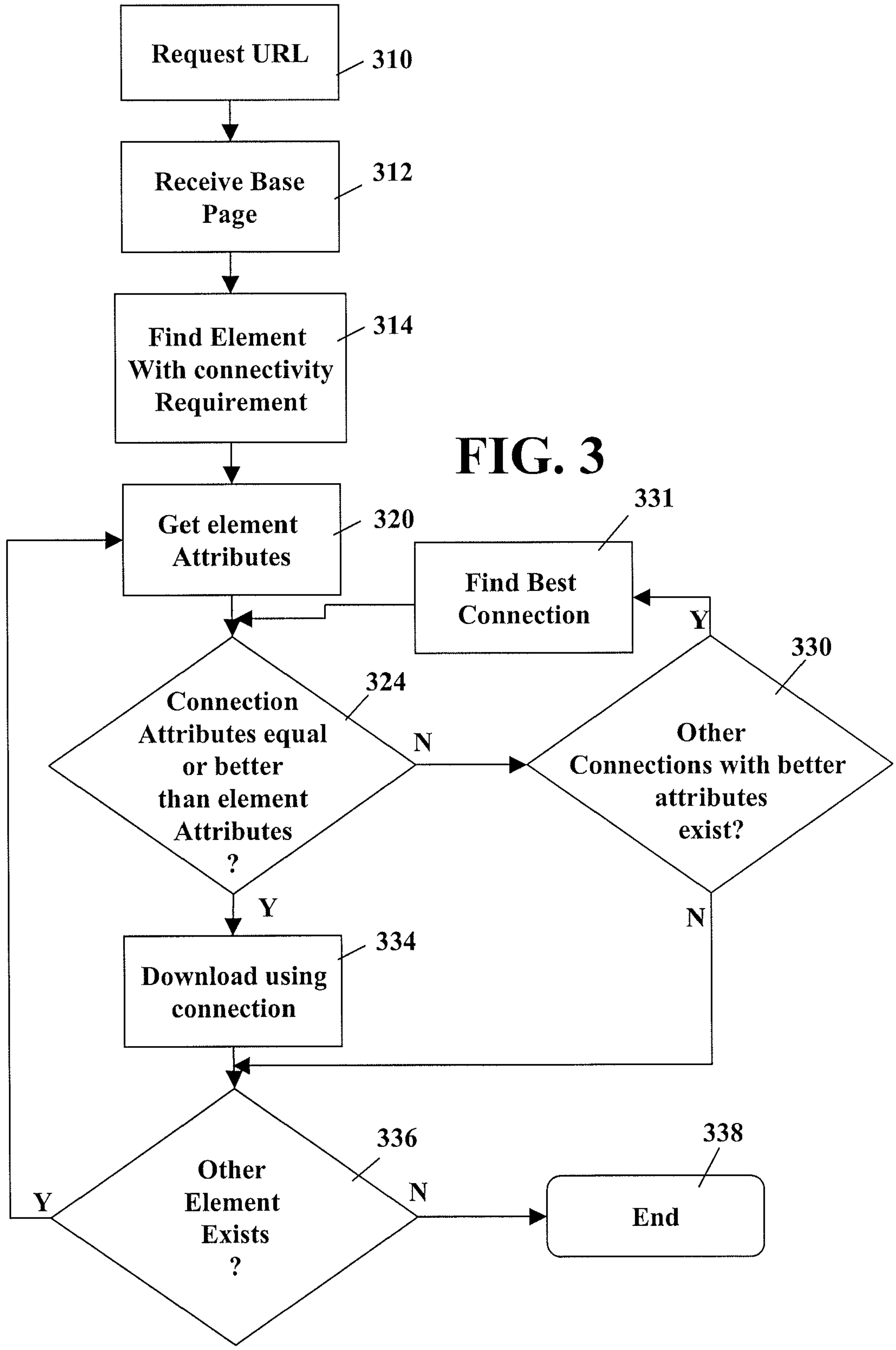
Request URL
310
Receive Base Page
312
Find Element With connectivity Requirement
314
Get element Attributes
320
331
Find Best Connection
Y
330
Connection Attributes equal or better than element Attributes ?
324
N
Other Connections with better attributes exist?
Y
N
Download using connection
334
Other Element Exists ?
336
338
Y
N
End

FIG. 3

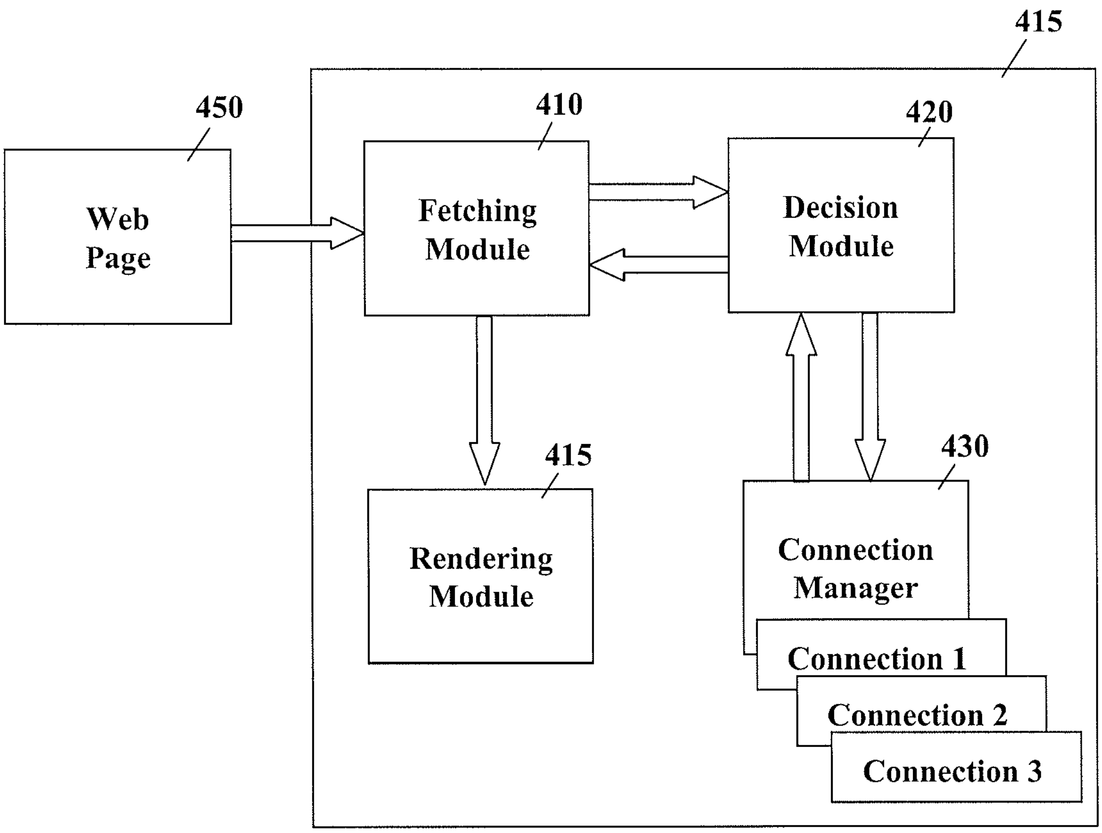
415
450
410
420
Web
Page
Fetching
Module
Decision
Module
415
430
Rendering
Module
Connection
Manager
Connection 1
Connection 2
Connection 3

FIG. 4

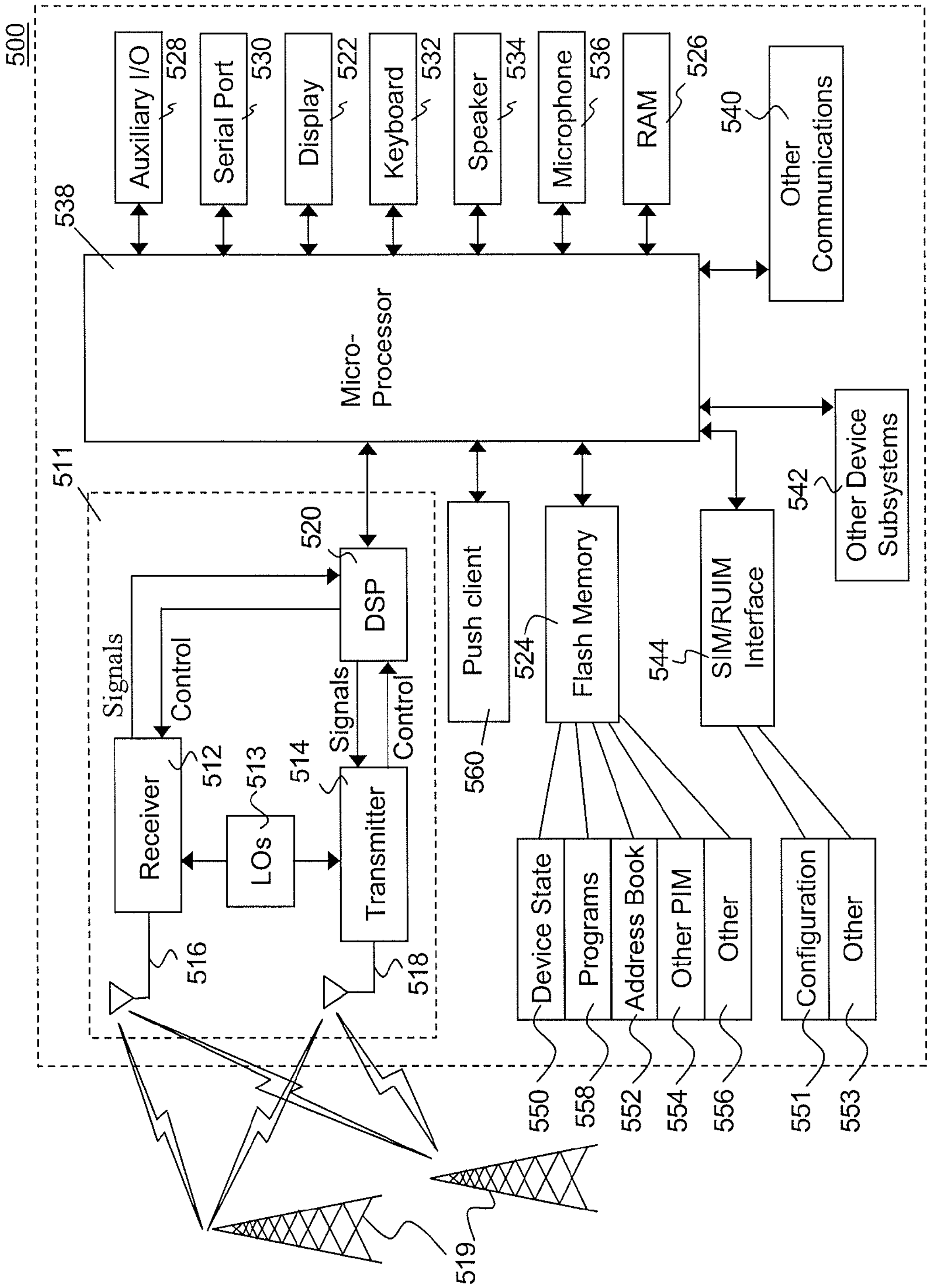
500
Auxiliary I/O
528
Serial Port
530
Display
522
Keyboard
532
Speaker
534
Microphone
536
RAM
526
Other Communications
540
538
Micro-Processor
Other Device Subsystems
542
511
Signals
Control
DSP
520
Signals
Control
Receiver
512
LOs
513
Transmitter
514
516
518
Push client
560
Flash Memory
524
SIM/RUIM Interface
544
Device State
Programs
Address Book
Other PIM
Other
Configuration
Other
550
558
552
554
556
551
553
519

FIG. 5

European Patent Office

# EUROPEAN SEARCH REPORT

Application Number
EP 07 10 9377

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SCHILIT B N ET AL: "TeleWeb: Loosely connected access to the World Wide Web" COMPUTER NETWORKS AND ISDN SYSTEMS, NORTH HOLLAND PUBLISHING. AMSTERDAM, NL, vol. 28, no. 11, May 1996 (1996-05), pages 1431-1444, XP004018240 ISSN: 0169-7552<br>* page 1433, column 1, paragraph 4 *<br>* page 1434, column 1, paragraph 4 *<br>* page 1435, column 1, paragraph 3 *<br>* page 1438, column 1 *<br>----- | 1-19 | INV.<br>G06F17/30<br>H04L29/08 |

| TECHNICAL FIELDS SEARCHED (IPC) |
|---|
| H04L<br>G06F |

The present search report has been drawn up for all claims

| Place of search | Date of completion of the search | Examiner |
|---|---|---|
| The Hague | 9 January 2008 | Manea, Anda |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)